# EUROPEAN PATENT APPLICATION

(11) **EP 2 966 839 A2**
(43) Date of publication of application: **13.01.2016**
(21) Application number: 15001897.6
(22) Date of filing: 25.06.2015
(51) Int. Cl.: H04M 1/03, H04R 1/22, H04R 3/14

(54) **HANDHELD COMMUNICATION DEVICE WITH A MULTI-ELECTROACOUSTIC TRANSDUCER CONFIGURATION AND REDUCED FORM FACTOR**

(30) Priority: 09.07.2014 US 201414326998
(71) Applicant: HARRIS CORPORATION, Melbourne, FL 32919 (US)
(72) Inventor: Tennant, Bryce, Rochester, NY 14625 (US); Kripp, Keith, Pittsford, NY 14534 (US); Fitzgerald, Andrew, East Rochester, NY 14445 (US); Kiehl, Aurora, Rochester, NY 14604 (US); Bogumil, Todd, Rochester, NY 14618 (US)
(74) Representative: Schmidt, Steffen J.

(57) **Abstract**

Systems **(300)** and methods **(1100)** for providing audio output from a handheld Communication Device ("CD"). The methods comprise: receiving an audio signal at CD; and dividing the audio signal into a first audio signal with a first frequency bandwidth and a second audio signal with a second frequency bandwidth exclusive of and lower than the first frequency bandwidth. Next, a first electroacoustic transducer **(402)** produces directional sound in response to the first audio signal. A second electroacoustic transducer **(404)** produces omnidirectional sound in response to the second audio signal. The first electroacoustic transducer is located on a first side **(406)** of CD which comprises at least one input device **(320, 340)** of a user interface **(330)** that has a stacked arrangement with the first electroacoustic transducer. The second electroacoustic transducer is located on a second side **(408)** opposed from the first side of the communication device.

## Description

### BACKGROUND

### Statement of the Technical Field

The inventive arrangements relate to handheld communication devices. More particularly, the inventive arrangements concern handheld communication devices with multi-electroacoustic transducer configurations and reduced form factors.

### Description of the Related Art

There are various handheld communication devices known in the art. Such handheld communication devices comprise handheld radios. Handheld radios typically require high quality audio and relatively large display screens, keypads, and navigation buttons. Simple operation of the radio requires a single side user interface. In this regard, all human interface components of the single side user interface are typically presented on the front side of the radio. Such a "single side user interface" restriction limits the ability to significantly reduce the overall height of the radio without sacrificing user experience.

In recent years, there has been an increasing desire to reduce the form factors of radios and other handheld communication devices, without compromising overall performance or user experience. As such, many solutions have been derived which attempt to provide a handheld communication device with a reduced form factor and acceptable overall performance. Despite the advantages of these solutions, they suffer from certain drawbacks. For example, such solutions typically sacrifice one or more of the following device features: display screen size; audio quality; and/or number of input devices. This is evident from the solution described in U.S. Patent No. 8,320,585 to Gruenhagen et al. ("the '585 patent").

The solution of the '585 patent comprises introducing a dual facing radio concept (a data side and an audio side) on a handheld communication device. Here, a loudspeaker is located on a first side (or audio side) of the handheld communication device. The display screen and keypad are located on a second opposing side (or data side) of the handheld communication device. Thus, the radio of the '585 patent comprises two active sides of user interface. In this case, audio quality originating from the first side (or audio side side) is sacrificed when a user is using the data side since his/her hand may at least partially cover the loudspeaker and high frequencies are attenuated due to directivity losses. Also, such a dual sided arrangement has the ability to confuse a user thereof since the radio must be flipped between the data side and the audio side when sequentially performing data operations and high quality audio operations.

In order to address the sacrifice of audio quality of the loudspeaker, a secondary speaker will be provided on the data side of the handheld communication device. The secondary speaker is provided to balance the full band audio output (i.e., high, mid and low frequency audio) from the primary speaker disposed on the audio side of the handheld communication device. In this regard, it should be understood that audio is virtually omnidirectional for wavelengths greater than the diameter of a speaker cone. As the audio wavelengths become smaller than the diameter of the speaker cone, the audio become more directional. Stated differently, low frequency audio is perceived as omnidirectional because the speaker diameter is typically smaller than the low frequency wavelengths. In contrast, high frequency audio is perceived as directional because the speaker diameter is typically greater than the high frequency wavelengths. Accordingly, some of the directional high frequency audio characteristics of the handheld communication device are attenuated when the user is using the data side and full band audio is output from the primary speaker located on the opposing audio side. To compensate for such audio loss, the secondary speaker is designed to reproduce the directional high frequency audio output from the primary speaker.

### SUMMARY OF THE INVENTION

The invention concerns implementing systems and methods for providing audio output from a handheld communication device. The methods comprise: receiving an audio signal at the handheld communication device; and dividing the audio signal into a first audio signal and a second audio signal. The first audio signal has a first frequency bandwidth (e.g., 2,000 Hz to 16 kHz). The second audio signal has a second frequency bandwidth exclusive of and lower than the first frequency bandwidth (e.g., 200 Hz to 2,000 Hz). Next, a first electroacoustic transducer produces directional sound in response to the first audio signal. Similarly, a second electroacoustic transducer produces omnidirectional sound in response to the second audio signal. The first electroacoustic transducer is located on a first side of the handheld communication device which comprises at least one input device of a user interface. The input device has a stacked arrangement with the first electroacoustic transducer. The second electroacoustic transducer is located on a second side opposed from the first side of the handheld communication device.

Notably, the second electroacoustic transducer can have an overall size that is larger than an overall size of the first electroacoustic transducer. Also, the first electroacoustic transducer may comprise a tweeter. The second electroacoustic transducer may comprise a woofer. In other scenarios, the first and second electroacoustic transducers may alternatively be used in a passive radiator configuration (as opposed to a woofer/tweeter configuration).

In some scenarios, a structure (e.g., a receiver for a belt clip and/or a radio holster) is provided to prevent a user of the handheld communication device from covering the second electroacoustic transducer. This structure protrudes out and away from the second side of the handheld communication device so as to at least partially cover the second electroacoustic transducer. As such, at least one audio port can be provided for allowing the omnidirectional sound to pass through the structure. For example, an audio port can be formed through at least one sidewall of the structure which is angled relative to a surface defining the second side of the handheld communication device. Additionally or alternatively, at least two audio ports can be formed through different sidewalls of the structure so as to have different orientations relative to a surface defining the second side of the handheld communication device.

In these and other scenarios, at least one audio port may be formed through a contoured surface at least partially defining the second side of the handheld communication device so as to be adjacent to a sidewall of the structure. Additionally or alternatively, at least two audio ports may be formed through one or more contoured surfaces at least partially defining the second side of the handheld communication device so as to have different orientations relative to each other.

### BRIEF DESCRIPTION OF THE DRAWINGS

Embodiments will be described with reference to the following drawing figures, in which like numerals represent like items throughout the figures, and in which:
FIG. 1 is a schematic illustration of a conventional handheld communication device that is useful for understanding the invention.
FIG. 2 is a cross sectional view of the conventional handheld communication device shown in FIG. 1 taken along line 1-1.
FIG. 3 is a block diagram of an exemplary handheld communication device that is useful for understanding the present invention.
FIG. 4 is a schematic illustration of an exemplary hardware architecture for the handheld communication device of FIG. 3.
FIG. 5 is a cross sectional view of the handheld communication device shown in FIGS. 3 and 4 that is useful for understanding the present invention.
FIGS. 6-10 provide various schematic illustrations of another exemplary architecture for a handheld communication device that is useful for understanding the present invention.
FIG. 11 is a flow diagram of an exemplary method for providing audio output from a handheld communication device in accordance with the present invention.

### DETAILED DESCRIPTION

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout the specification may, but do not necessarily, refer to the same embodiment.

Furthermore, the described features, advantages and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment", "an embodiment", or similar language means that a particular feature, structure, or characteristic described in connection with the indicated embodiment is included in at least one embodiment of the present invention. Thus, the phrases "in one embodiment", "in an embodiment", and similar language throughout this specification may, but do not necessarily, all refer to the same embodiment.

As used in this document, the singular form "a", "an", and "the" include plural references unless the context clearly dictates otherwise. Unless defined otherwise, all technical and scientific terms used herein have the same meanings as commonly understood by one of ordinary skill in the art. As used in this document, the term "comprising" means "including, but not limited to".

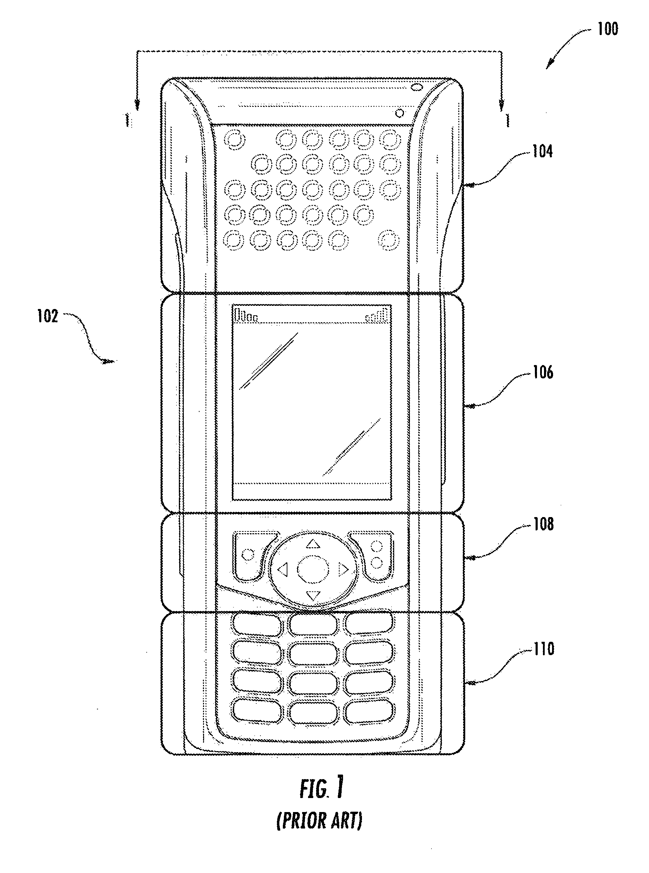

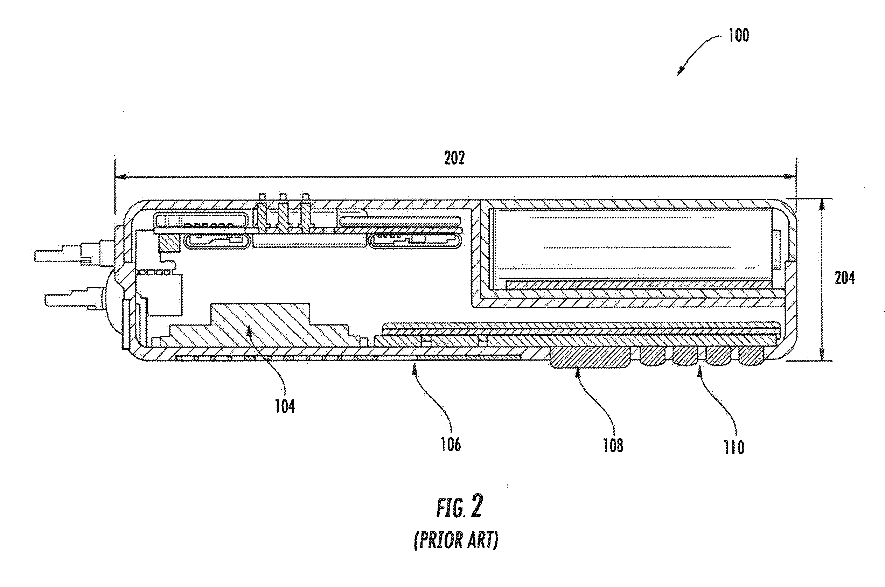

The present invention concerns systems and methods for delivering high quality audio using a handheld communication device with a multi-electroacoustic transducer configuration in a reduced form factor. Currently, conventional handheld communication devices **100** have a single side user interface **102**, as shown in FIGS. 1-2. The user interface **102** comprises a relatively large electroacoustic transducer **104**, a display screen **106**, navigation keys **108** and a keypad **110**. These components **104-110** have a stacked arrangement, and therefore define the overall height of the handheld communication device **100**. The electroacoustic transducer **106** is generally provided to project received audio signals at low, mid and high frequencies. In order to reduce the overall height of the handheld communication device **100** compromises need to be made on the product. Typically, such compromises result in a reduction in the audio quality provided by the electroacoustic transducer **106**, a decrease in the size of the display screen **106**, an elimination of the navigation keys **108**, and/or a reduction in the size of the keypad **110**. The reduction in the audio quality may result from limited size, poor location, poor porting, and other factors. In contrast, the present invention provides a solution for reducing the overall size of a handheld communication device without any or minor such compromise. Notably in the minor compromise scenarios, any degradation in performance is imperceptible. The manner in which the present solution achieves these features will become more evident as the discussion progresses.

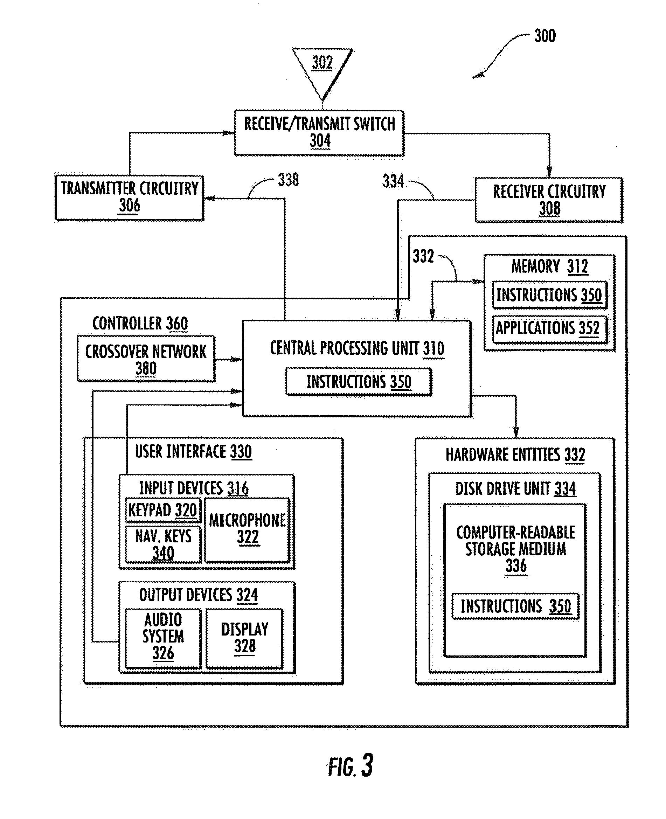

Referring now to FIG. 3, there is provided a block diagram of an exemplary architecture for a handheld communication device **300** which is useful for understanding the present invention. The handheld communication device **300** can include, but is not limited to, a radio, a cellular phone, a mobile phone, a personal digital assistant, a laptop computer, a tablet, or a hybrid tablet/computer device.

Notably, some or all the components of the handheld communication device 300 can be implemented as hardware, software and/or a combination of hardware and software. The hardware includes, but is not limited to, one or more electronic circuits. The electronic circuits can include passive components (e.g., speakers, capacitors, and resistors) and active components (e.g., amplifiers and processors). The passive and/or active components can be arranged to, adapted to and/or programmed to perform one or more functions of the handheld communication device **300**.

The handheld communication device **300** may include more or less components than those shown in FIG. 3. However, the components shown are sufficient to disclose an illustrative embodiment implementing the present invention. The hardware architecture of FIG. 3 represents one embodiment of a representative handheld communication device **300** which has a multi-electroacoustic transducer arrangement and a reduced form factor.

As shown in FIG. 3, the handheld communication device **300** comprises an antenna **302** for receiving and transmitting communication signals over a network communications link. A receive/transmit (Rx/Tx) switch **304** selectively couples the antenna **302** to the transmitter circuitry **306** and receiver circuitry **308** in a manner familiar to those skilled in the art. Although a single antenna **302** and transceiver **304/306/308** is shown in FIG. 3, the present invention is not limited in this regard. The handheld communication device **300** can alternatively comprise a first antenna and a first transceiver for handling telephony communications, as well as a second antenna and a second transceiver for handling PTT communications.

The receiver circuitry **308** decodes the communication signals received from an external communication device to derive information therefrom. The receiver circuitry **308** is coupled to a controller **360** via an electrical connection **334.** The receiver circuitry **308** provides decoded communication signal information to the controller **360.** The controller **360** uses the decoded communication signal information in accordance with the function(s) of the handheld communication device **300**. The controller **360** also provides information to the transmitter circuitry **306** for encoding information and/or modulating information into communication signals. Accordingly, the controller **360** is coupled to the transmitter circuitry **306** via an electrical connection **338**. The transmitter circuitry **306** communicates the communication signals to the antenna **302** for transmission to an external device.

The controller **360** stores the decoded signal information in its internal memory **312.** Accordingly, the controller **360** comprises at least one Central Processing Unit ("CPU") **310.** The CPU(s) may include, but is(are) not limited to, a General Purpose Processor ("GPP") and/or a Digital Signal Processor ("DSP"). The GPP is generally responsible for managing the transmission and reception of the radio information. In this case, the DSP converts an over-the-air RF signal into an audio signal presented to an operator. Important to this invention is the DSPs responsibility to convert the audio into two meaningful signals that can be handled by the woofer/tweeter combination.

The CPU is connected to and able to access the memory **312** through an electrical connection **332.** The memory **312** can be a volatile memory and/or a non-volatile memory. For example, the memory **312** can include, but is not limited to, a Random Access Memory ("RAM"), a Dynamic Random Access Memory ("DRAM"), a Static Random Access Memory ("SRAM"), Read-Only Memory ("ROM") and flash memory. The memory **312** can also have stored therein software applications **352** and/or instructions **350**. The software applications **352** include, but are not limited to, applications operative to facilitate network communications.

At least some of the hardware entities **332** perform actions involving access to and use of memory **312**. In this regard, hardware entities **332** may include microprocessors, Application Specific Integrated Circuits ("ASICs") and other hardware. Hardware entities **332** may include a microprocessor programmed for facilitating network communications. In this regard, it should be understood that the microprocessor can access and run applications **352** installed on the handheld communication device **300**.

As shown in FIG. 3, the hardware entities **332** can include a disk drive unit **334** comprising a computer-readable storage medium **336** on which is stored one or more sets of instructions **350** (e.g., software code) configured to implement one or more of the methodologies, procedures, or functions described herein. The instructions **350** can also reside, completely or at least partially, within the memory **312** and/or within the CPU **310** during execution thereof by the handheld communication device **300**. The memory **312** and the CPU **310** also can constitute machine-readable media. The term "machine-readable media", as used here, refers to a single medium or multiple media (e.g., a centralized or distributed database, and/or associated caches and servers) that store the one or more sets of instructions **350**. The term "machine-readable media", as used here, also refers to any medium that is capable of storing, encoding or carrying a set of instructions **350** for execution by the handheld communication device **300** and that cause the handheld communication device **300** to perform any one or more of the methodologies of the present disclosure.

The user interface **330** comprises input devices **316** and output devices **324**. The input devices **316** include, but are not limited to, a keypad **320**, navigation keys **340**, a microphone **322**, and buttons (not shown). The keypad **320**, navigation keys **340**, and buttons can enable user-software interactions to control operations of the handheld communication device **300**. Each of the listed input devices is well known in the art, and therefore will not be described herein. Any known or to be known input device suitable for a particular application can be used with the present invention without limitation.

The output devices **324** include, but are not limited to, an audio system **326** and a display **328**. During operation, one or more GUIs may be presented to the user of the handheld communication device **300** via the display **328**. For example, a GUI may be displayed on display **328** for enabling a user-software interaction to initiate a call.

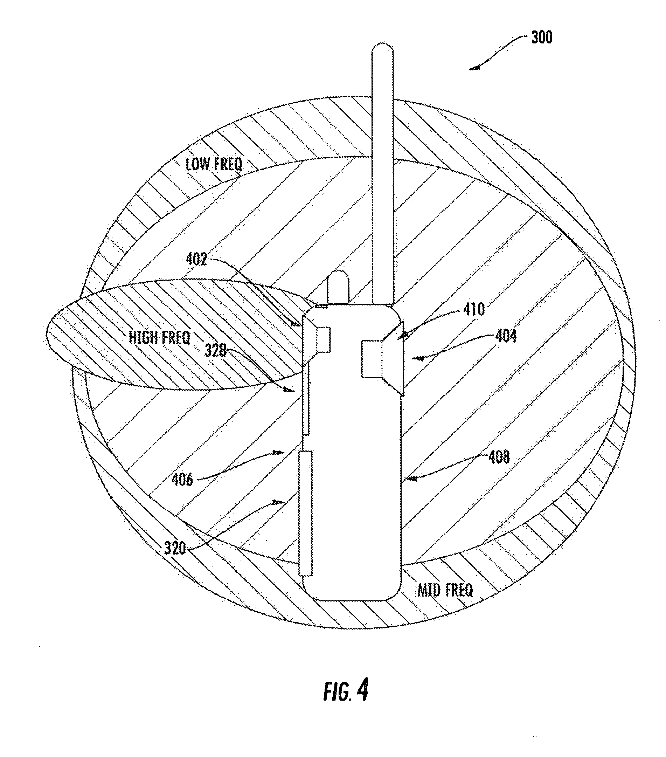

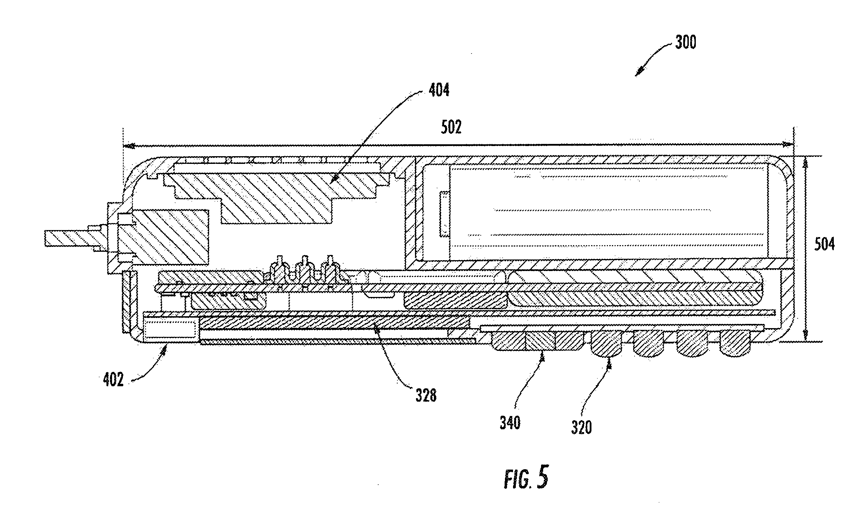

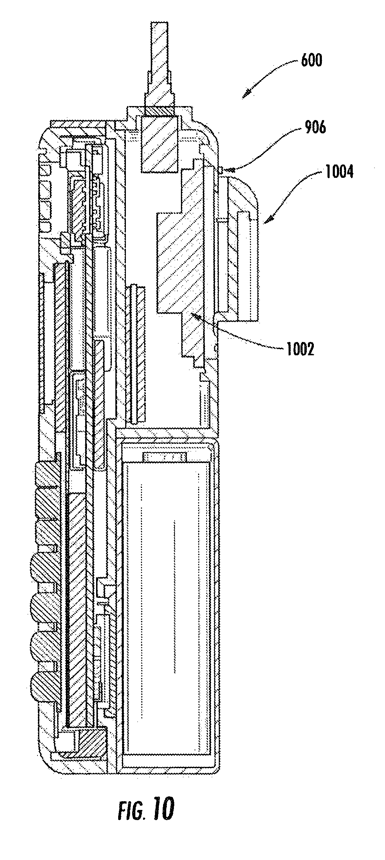

Notably, various hardware components of the user interface **330** are arranged to facilitate the reduced form factor of the handheld communication device **300**. As such, the discussion provided below in relation to FIGS. 4-10 is directed towards exemplary novel hardware architectures for the handheld communication device **300**.

Referring now to FIGS. 3-5, the audio system **326** of the handheld communication device **300** comprises two electroacoustic transducers and an audio cross over network **380** such that a user of the handheld communication device **300** has a full frequency band audio experience. The two electroacoustic transducers include a first electroacoustic transducer **402** and a second electroacoustic transducer **404**. The first electroacoustic transducer **402** is located on a first side **406** of the handheld communication device **300**, while the second electroacoustic transducer **404** is located on a second side **408** opposed from the first side **406** of the handheld communication device **300**. This two electroacoustic transducer arrangement has certain advantages. For example, the overall audio quality and perceived loudness of the communication device is improved as compared to conventional communication devices. This will become more evident as the discussion progresses.

In order to reduce the overall height of the handheld communication device **300**, the stacked arrangement of a relatively large speaker, display screen **312**, keypad **314** and navigation keys **340** was eliminated. In this regard, the size of electroacoustic transducer **402** may be reduced as compared to that of conventional communication devices. Consequently, the handheld communication device **300** has a stacked arrangement of a relatively small electroacoustic transducer **402**, display screen **312**, keypad **314** and navigation keys. This stacked arrangement enables the reduction in the overall height **502** of the handheld communication device **300** as compared to the overall height **202** the handheld conventional communication device **100** (e.g., by at least 20 mm), while maintaining the same or substantially similar the overall width **204**, **504** and user audio experience.

Notably, the first electroacoustic transducer **402** is designed to produce directional high frequency audio. Therefore, the first electroacoustic transducer **402** acts as or similar to a tweeter. The term "tweeter", as used herein, refers to a loudspeaker intended to be used for audio frequencies from around 2,000 Hz to 16 KHz. In some scenarios, the first electroacoustic transducer **402** comprises an electrodynamic driver which uses a voice coil suspended within a fixed magnetic field. Such a design operates by applying a current from the output of an amplifier circuit to the voice coil. Embodiments of the present invention are not limited to the particulars of such a first electroacoustic transducer architecture. Any known or to be known loudspeaker or tweeter architecture can be used herein without limitation.

However, as a result of this first electroacoustic transducer design, the communication device experiences loss in relation to its low frequency audio characteristic. Therefore, the second electroacoustic transducer **404** is designed to compensate for the loss in the low frequency audio by at least being larger in size as compared to that of the first electroacoustic transducer **402**. Notably, the relatively large electroacoustic transducer **404** offers better response and perceived volume as compared to that offered by the relatively small electroacoustic transducer **402**. The second electroacoustic transducer **404** is also omnidirectional for wavelengths at or greater than the diameter of the transducer cone **410**, as shown in FIG. 4. In this regard, the second electroacoustic transducer **404** produces omnidirectional low frequency audio which provides the increased perceived loudness of the audio system **326** and the improved bass response of the audio system **326** on the first side **406** of the communication device **300**. The second electroacoustic transducer **404** may also produce mid frequency audio. Thus, the second electroacoustic transducer **404** acts as or similar to a woofer. The term "woofer", as used herein, refers to a loudspeaker designed to produce low frequency sounds and/or mid frequency sounds. Such sounds have a frequency at least from **200** Hz to 2,000 Hz, and in some cases 100 Hz to 2,000 Hz.

As noted above, a crossover network **380** is provided within the handheld communication device **300**. The crossover network **380** comprises at least one electronic filter for use in audio applications. During operation, the electronic filter(s) split(s) an audio signal into separate frequency bands that can be separately routed to the first and second electroacoustic transducers **402**, **404**, which are optimized for their respective frequency bands. In some scenarios, the audio signal is divided by the crossover network **380** prior to or subsequent to any amplification thereof. The crossover network **380** may also perform other signal processing operations, such as limiting, delay and equalization. Crossover networks are well known in the art. Any known or to be known crossover network that is suitable for a particular application can be used herein without limitation. Still, it should be understood that the crossover network can be implemented in both analog and digital software. Crossover networks should also not be limited to fixed frequency, but can be adjustable, adaptable, configurable, and/or have common frequency bands that overlap.

The result of such a crossover network **380** and audio system **326** arrangement is an attenuation of high frequency audio relative to the first side **406** (or front) of the handheld communication device **300** for audio signals emitted from the second side **408** (or rear) of the handheld communication device **300**. As a result of this attenuation, audio will sound most natural from only the first side **406** of the handheld communication device **300**.

Also, the handheld communication device **300** has an audio characteristic which spans a larger frequency range as compared to conventional communication devices. For example, audio output of conventional communication devices typically spans a frequency range of 300 Hz to 4 KHz. In contrast, the audio output of handheld communication device **300** spans a frequency range of at least 200 Hz to 16 KHz in some scenarios.

Although the audio system **326** is provided with two electroacoustic transducers **402**, **404**, the handheld communication device **300** comprises a single side user interface provided on the first side **406** thereof. As such, the present invention overcomes certain drawbacks of conventional handheld communication devices, such as that disclosed in the '585 patent. For example, the present invention eliminates the user confusion caused by having a dual sided user interface (which would be provided on both sides **406**, **408** of the handheld communication device rather than exclusively on one side **406**).

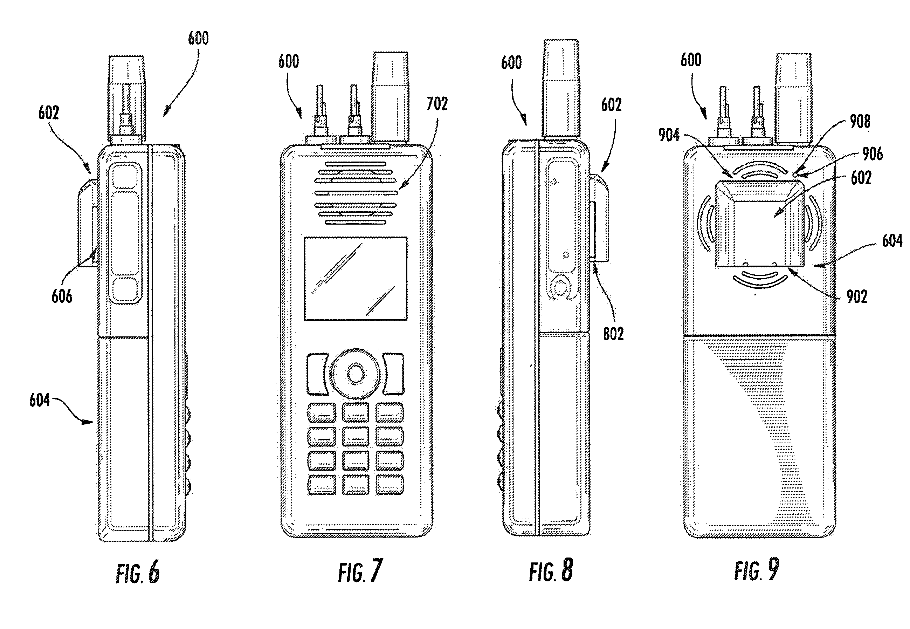

Notably, in some scenarios, the secondary electroacoustic transducer **304** is at least partially hidden from view by the user of the handheld communication device **300**. As such, the single side user interface feature of the present invention is visibly clear to a user of the handheld communication device **300**, whereby any potential user confusion with regard to the location of the single side user interface is minimized. Exemplary embodiments of a communication device with a hidden secondary electroacoustic transducer will be described below in relation to FIGS. 6-10.

Referring now to FIGS. 6-10, there are provided schematic illustrations of an exemplary architecture for a handheld communication device **600** implementing the present invention. The handheld communication device **600** comprises a first electroacoustic transducer **702**, a second electroacoustic transducer **1002**, and a crossover network (not shown) which are respectively substantially similar to or the same as the first electroacoustic transducer **402**, the second electroacoustic transducer **404** and the crossover network **380** described above. As such, the above discussion of components **402**, **404** and **380** is sufficient for understanding the corresponding components of communication device **600**.

However, unlike the above described second electroacoustic transducer **404** of communication device **300**, the second electroacoustic transducer **1002** of communication device **600** is at least partially hidden from view by a structure **602**. The structure **602** protrudes out and away from a rear surface **604** of the handheld communication device **600** so as to prevent a user from covering the second electroacoustic transducer **1002** by placing his/her hand thereover while grasping the communication device. In some scenarios, structure **602** includes, but is not limited to, a receiver for a belt clip and/or a radio holster. Radio holsters, belt clips and associated receivers are known in the art, and therefore will not be described herein. Any known or to be known radio holster, belt clip and receiver configuration suitable for a particular application can be used herein without limitation.

Since structure **602** at least partially covers the second electroacoustic transducer **1002**, audio ports **606**, **802**, **902**, **904** are provided through structure **602**. The audio ports **606**, **802**, **902**, **904** comprise at least one aperture, slot, hole, or channel through which an audio signal or sound can pass. In this scenario, the audio ports **606**, **802**, **902**, **904** are arranged so as to be in different orientations relative to the structure **602**. For example, a first audio port **606** is formed through a left sidewall of the structure **602**. A second audio port **802** is formed through a right sidewall of the structure **602**. A third audio port **904** is formed through a top sidewall of the structure **602**. A fourth audio port **902** is formed through a bottom sidewall of the structure **602**. Each sidewall (top, bottom, left and right) can be orthogonal (i.e., 90°) to or angled (0.1°-90°) relative to the rear surface **604** of the handheld communication device **600**. Embodiments of the present invention are not limited to the particulars of this exemplary audio port configuration.

Additionally or alternatively, at least one audio port **908** can be provided through a contoured surface **906** that is adjacent to the structure **602** and protrudes out and away from the rear surface **604** of the handheld communication device **600**. The contoured surface **906** can include, but is not limited to, an outward facing dimple or a raised ridge. Audio port **908** may comprise at least one aperture, slot, hole, or channel through which an audio signal or sound can pass. Also, audio port **908** can have the same orientation or different orientation relative to the structure **602** as one or more other audio ports **606**, **802**, **902**, **904**.

Also, at least one audio port **606**, **802**, **902**, **904** can have a dual purpose: (1) enable audio signals to travel from second electroacoustic transducer **1002** through the housing and/or structure of the handheld communication device **600**; (2) enable the removal of dirt, water or other environmental contaminate from within the handheld communication device **600**; and (3) providing a thermal vent to dissipate heat generated by the speaker's voice coil.

In view of the forgoing, the present invention provides communication devices with a multi- electroacoustic transducer configuration in a reduced form factor. The multi-electroacoustic transducer configuration is comprised of a tweeter, a woofer and a crossover network which collectively enable: (a) a smaller handheld communication device by removing the mechanical stack-up constraints of a single side user interface without sacrificing audio quality; (b) the use of a smaller electroacoustic transducer on the front of the handheld communication device; (c) an addition of loudness and bass response to the handheld communication device without increasing overall device size; and (d) a maximization of the use of available device space. The present invention also provides a way to eliminate a user's ability to inadvertently block the audio output from the second electroacoustic transducer when grasping the handheld communication device. The rear audio port geometry conceals and protects the second electroacoustic transducer without impacting desired audio performance. The present invention further simplifies the audio capture subsystem of the device because user interaction becomes more predictable.

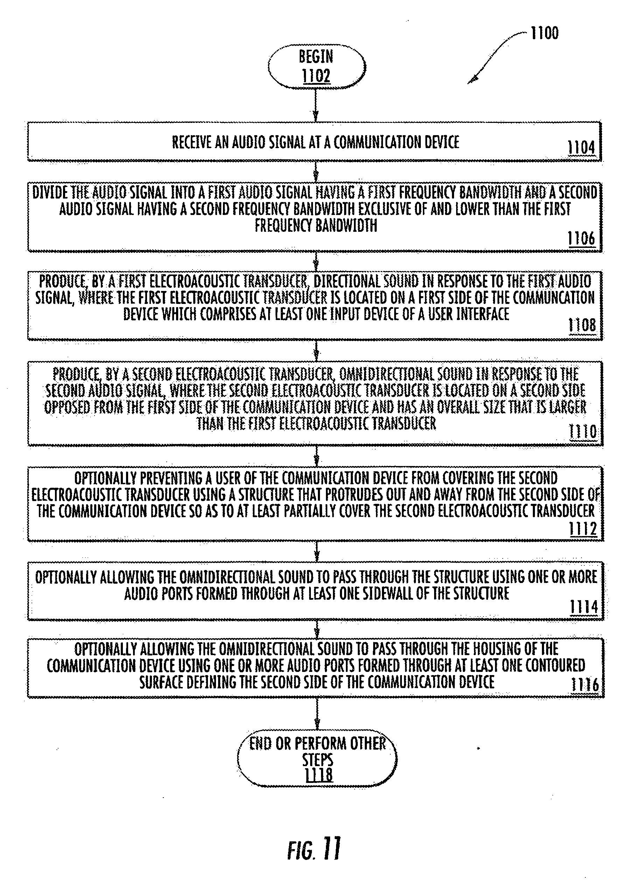

Referring now to FIG. 11, there is provided a flow diagram of an exemplary method 1100 for providing audio output from a handheld communication device in accordance with the present invention. Method **1100** begins with step **1102** and continues with step **1104**. Step **1104** involves receiving an audio signal at the handheld communication device (e.g., communication device **300** of FIG. 3). Next, in step **1106**, the audio signal is divided into a first audio signal and a second audio signal. The first audio signal has a first frequency bandwidth (e.g., 2,000 Hz to 16 kHz). The second audio signal has a second frequency bandwidth exclusive of and lower than the first frequency bandwidth (e.g., 200 Hz to 2,000 Hz). Next, in step **1108**, a first electroacoustic transducer (e.g., electroacoustic transducer **402** of FIG. 4) produces directional sound in response to the first audio signal. Similarly, in step **1110**, a second electroacoustic transducer (e.g., electroacoustic transducer **404** of FIG. 4) produces omnidirectional sound in response to the second audio signal.

Notably, the first electroacoustic transducer is located on a first side of the communication device (e.g., side **406** of FIG. 4) which comprises at least one input device (e.g., keypad **320** or navigation keys **340** of FIG. 3) of a user interface (e.g., user interface 330 of FIG. 3). The input device has a stacked arrangement with the first electroacoustic transducer. The second electroacoustic transducer is located on a second side (e.g., side **408** of FIG. 4) opposed from the first side of the communication device. Also, the second electroacoustic transducer can have an overall size that is larger than an overall size of the first electroacoustic transducer. In this case, the first electroacoustic transducer may comprise a tweeter, and the second electroacoustic transducer may comprise a woofer.

In some scenarios, method **1100** further includes optional steps **1112-1116**. Optional step 1112 involves preventing the user from covering the second electroacoustic transducer using a structure (e.g., **602** of FIG. 6) that protrudes out and away from the second side of the communication device so as to at least partially cover the second electroacoustic transducer. The structure can include, but is not limited to, a receiver for a belt clip. Optional step **1114** involves allowing the omnidirectional sound to pass through the structure using one or more audio ports (e.g., audio port **606** of FIG. 6, audio port **802** of FIG. 8, and/or audio port **902**, **904** of FIG. 9) formed through at least one sidewall of the structure. The sidewall(s) can be angled relative to a surface defining the second side of the communication device. Additionally or alternatively, the omnidirectional sound can be allowed to pass through a housing of the communication device using one or more audio ports (e.g., audio port **908** of FIG. 9) formed through at least one contoured surface at least partially defining the second side of the communication device so as to be adjacent to a sidewall of the structure, as shown by optional step **1116**. If a plurality of audio ports is used in optional step **1114** and/or optional step **1116**, then the audio ports can have the same or different orientations relative to each other and/or a surface defining the second side of the communication device. Next, step **1118** is performed where method **1100** ends or other steps are performed.

All of the apparatus, methods and algorithms disclosed and claimed herein can be made and executed without undue experimentation in light of the present disclosure. While the invention has been described in terms of preferred embodiments, it will be apparent to those of skill in the art that variations may be applied to the apparatus, methods and sequence of steps of the method without departing from the concept, spirit and scope of the invention. More specifically, it will be apparent that certain components may be added to, combined with, or substituted for the components described herein while the same or similar results would be achieved. All such similar substitutes and modifications apparent to those skilled in the art are deemed to be within the spirit, scope and concept of the invention as defined.

## Claims

1. A method for providing audio output from a handheld communication device, comprising:
receiving an audio signal at the handheld communication device;
dividing the audio signal into a first audio signal with a first frequency bandwidth and a second audio signal with a second frequency bandwidth exclusive of and lower than the first frequency bandwidth;
producing, by a first electroacoustic transducer of the handheld communication device, directional sound in response to the first audio signal, the first electroacoustic transducer located on a first side of the handheld communication device which comprises at least one input device of a user interface that has a stacked arrangement with the first electroacoustic transducer; and
producing, by a second electroacoustic transducer of the handheld communication device, omnidirectional sound in response to the second audio signal, the second electroacoustic transducer located on a second side opposed from the first side of the handheld communication device.

2. The method according to claim 1, wherein the second electroacoustic transducer has an overall size that is larger than an overall size of the first electroacoustic transducer.

3. The method according to claim 1, wherein the first electroacoustic transducer comprises a tweeter and the second electroacoustic transducer comprises a woofer.

4. The method according to claim 1, wherein the dividing is performed by a crossover network of the handheld communication device prior to or subsequent to any amplification of an audio signal.

5. The method according to claim 1, further comprising separately routing the first second audio signals respectively to the first and second electroacoustic transducers.

6. The method according to claim 1, further comprising preventing a user of the handheld communication device from covering the second electroacoustic transducer using a structure that protrudes out and away from the second side of the handheld communication device so as to at least partially cover the second electroacoustic transducer.

7. The method according to claim 6, wherein the structure is a receiver for a belt clip.

8. The method according to claim 6, further comprising allowing the omnidirectional sound to pass through the structure using at least one audio port formed through at least one sidewall of the structure which is angled relative to a surface defining the second side of the handheld communication device.

9. The method according to claim 6, further comprising allowing the omnidirectional sound to pass through the structure using at least two audio ports formed through different sidewalls of the structure so as to have different orientations relative to a surface defining the second side of the handheld communication device.

10. The method according to claim 6, further comprising allowing the omnidirectional sound to pass through the housing of the handheld communication device using at least one audio port formed through at least one contoured surface at least partially defining the second side of the handheld communication device so as to be adjacent to a sidewall of the structure.
